# FASCICULE DE BREVET EUROPEEN

(11) **EP 4 025 409 B1**
(45) Date de publication et mention de la délivrance du brevet: **19.07.2023**
(21) Numéro de dépôt: 20801343.3
(22) Date de dépôt: 14.10.2020
(51) Int. Cl.: B29C 64/153, B33Y 10/00, B33Y 80/00, H01F 41/02, H02K 15/02, H01F 3/08, H02K 1/02

(54) **PIÈCE MONOBLOC ET FERROMAGNÉTIQUE D'UNE MACHINE ÉLECTRIQUE TOURNANTE**
EINSTÜCKIGER FERROMAGNETISCHER TEIL EINER ROTIERENDEN ELEKTRISCHEN MASCHINE
ONE-PIECE FERROMAGNETIC PART OF A ROTATING ELECTRIC MACHINE

(30) Priorité: 16.10.2019 FR 1911546
(43) Date de publication de la demande: 13.07.2022
(73) Titulaire: Commissariat à l'Energie Atomique et aux Energies Alternatives, 75015 Paris (FR)
(72) Inventeur: AIXALA, Luc, 38054 Grenoble Cedex 09 (FR); BUI-VAN, Anh Linh, 38054 Grenoble Cedex 09 (FR); GAILLARD, Gilles, 38054 Grenoble Cedex 09 (FR)
(74) Mandataire: Brevalex
(86) Numéro de dépôt international: PCT/FR2020/051819
(87) Numéro de publication internationale: WO 2021/074526

(56) Documents cités:
- EP-A1- 3 373 311
- EP-A2- 2 978 104
- DE-A1-102015 204 721

## Description

### DOMAINE TECHNIQUE

La présente invention concerne une pièce monobloc et ferromagnétique d'une machine électrique tournante. La pièce peut notamment former le rotor ou le stator de la machine électrique tournante.

À cet égard, la pièce comprend, selon une direction d'élongation, une alternance de premières sections pleines, et de deuxièmes sections partiellement ajourées de manière à limiter les pertes par courants de Foucault susceptibles de survenir lors du fonctionnement de la machine électrique tournante.

L'invention concerne également un procédé de formation de la pièce par fabrication additive.

### ÉTAT DE LA TECHNIQUE ANTÉRIEURE

Les éléments conducteurs des machines électriques tournantes, et notamment le rotor et le stator, sont connus pour être le siège de pertes par courants de Foucault qui affectent d'autant les performances de ladite machine.

Afin de limiter cet effet, ces éléments conducteurs sont généralement formés par un empilement, selon une direction d'empilement, de feuillets ou de tôles ferromagnétiques isolées entre elles. Cette isolation prend généralement la forme d'un revêtement isolant, notamment un revêtement organique.

Par ailleurs, l'emboutissage et le poinçonnage, qui sont généralement mis en oeuvre pour la fabrication, notamment en série, des tôles, limitent ces dernières à des formes simples.

En outre, l'intégration d'une fonction de refroidissement fluidique au sein du rotor et/ou du stator, pourtant intéressante pour l'amélioration des performances d'une machine électrique tournante, reste compliquée voire impossible. En effet, cette fonction impose des conditions d'étanchéité qui restent incompatibles avec la nature même d'un empilement de tôles, et/ou les phénomènes de dilatation thermique susceptibles de survenir lorsque la machine électrique tournante est en fonctionnement.

Afin de pallier les problèmes susmentionnés, il a été proposé par l'institut VTT Technical Research centre of Finland LTD de fabriquer un rotor par impression 3D.

Cependant, le rotor ainsi fabriqué ne permet ni la gestion des courants de Foucault ni la gestion thermique par écoulement fluidique.

Par conséquent, un but de la présente invention est de proposer un procédé de formation d'une pièce d'une machine électrique tournante qui permet l'intégration de fonctions supplémentaires telle qu'une fonction de refroidissement fluidique.

Un autre but de la présente invention est de proposer un procédé de formation d'une pièce d'une machine électrique tournante pour laquelle les pertes par courants de Foucault sont limitées.

EP3373311 divulgue un squelette pour un noyau magnétique et son procédé de fabrication.

EP2978104 divulgue un générateur et un moteur à entrefer à vide.

DE 10 2015 204 721 divulgue un rotor refroidi par fluide pour une machine électrique, ainsi qu'un procédé de réalisation.

### EXPOSÉ DE L'INVENTION

Les buts de la présente invention sont, au moins en partie, atteints par un procédé de formation, par fabrication additive, d'une pièce, monobloc et ferromagnétique, d'une machine électrique tournante, la pièce comprenant, selon un axe d'élongation XX', une alternance de premières sections d'une première épaisseur E1 et de deuxièmes sections d'une deuxième épaisseur E2, les premières sections sont pleines tandis que chaque deuxième section, est intercalée entre deux premières sections successives, et est partiellement évidée de manière à limiter l'établissement les pertes par courants de Foucault susceptibles de survenir lors du fonctionnement de la machine électrique tournante,
le procédé comprenant l'exécution en alternance d'une première pluralité de premiers cycles et d'une deuxième pluralité de deuxièmes cycles, chaque première pluralité et chaque deuxième pluralité étant destinée à former, respectivement, une première section et une deuxième section,
le premier et le deuxième cycle comprenant chacun les étapes suivantes :
   a) la formation d'une couche de poudre d'un matériau ferromagnétique sur la face avant d'un support ;
   b) une consolidation sélective, avantageusement une fusion sélective, d'une région de la couche de poudre de manière à former un motif relatif à l'une ou l'autre de la première ou de la deuxième section considérée.

Selon un mode de mise en oeuvre, l'évidement des deuxièmes sections correspond à au moins 30%, avantageusement 50 % de leur volume.

Selon un mode de mise en oeuvre, les deuxièmes sections comprennent des poutres assurant la cohésion entre les premières sections successives.

Selon un mode de mise en oeuvre, la pièce présente une symétrie de révolution autour de l'axe d'élongation XX'.

Selon un mode de mise en oeuvre, la pièce comprend un alésage débouchant selon l'une et l'autre des extrémités de la pièce.

Selon un mode de mise en oeuvre, les évidements au niveau des deuxièmes sections comprennent des premiers canaux.

Selon un mode de mise en oeuvre, les premiers canaux sont débouchants.

Selon un mode de mise en oeuvre, les premiers canaux débouchent au niveau de l'alésage.

Selon un mode de mise en oeuvre, lors de l'exécution du procédé, des deuxièmes canaux de circulation fluidique qui s'étendent selon une direction définie par l'axe d'élongation XX' sont formés.

Selon un mode de mise en oeuvre, la pièce est un rotor.

Selon un mode de mise en oeuvre, le procédé comprend également la formation d'un arbre formé d'un seul tenant avec le rotor.

Selon un mode de mise en oeuvre, la pièce est un stator.

Selon un mode de mise en oeuvre, la poudre de matériau magnétique comprend au moins un des alliages choisi parmi : FeSi, FeCo, FeNi.

Selon un mode de mise en oeuvre, l'étape b) est exécutée au moyen d'un laser.

L'invention concerne également une pièce d'une machine électrique tournante, monobloc et ferromagnétique, la pièce comprenant, selon un axe d'élongation XX', une alternance de premières sections d'une première épaisseur E1 et de deuxièmes sections d'une deuxième épaisseur E2, les premières sections sont pleines tandis que chaque deuxième section, est intercalée entre deux premières sections successives, et est partiellement évidées de manière à limiter l'établissement les pertes par courants de Foucault susceptibles de survenir lors du fonctionnement de la machine électrique tournante.

Selon un mode de réalisation, l'évidement des deuxièmes sections correspond à au moins 30%, avantageusement 40 %, encore plus avantageusement 50 %, de leur volume.

Selon un mode de réalisation, les deuxièmes sections comprennent des poutres assurant la cohésion entre les premières sections successives.

Selon un mode de réalisation, la pièce présente une symétrie de révolution autour de l'axe de d'élongation XX'.

Selon un mode de réalisation, la pièce comprend un alésage débouchant selon l'une et l'autre des extrémités de la pièce.

Selon un mode de réalisation, les évidements au niveau des deuxièmes sections comprennent des premiers canaux.

Selon un mode de réalisation, les premiers canaux sont débouchants.

Selon un mode de réalisation, les premiers canaux débouchent au niveau de l'alésage.

Selon un mode de réalisation, des deuxièmes canaux de circulation fluidique s'étendent selon une direction définie par l'axe d'élongation XX'.

Selon un mode de réalisation, la pièce est un rotor.

Selon un mode de réalisation, la pièce est un stator.

Selon un mode de réalisation, le matériau magnétique comprend au moins un des alliages choisi parmi : FeSi, FeCo, FeNi.

### BRÈVE DESCRIPTION DES DESSINS

D'autres caractéristiques et avantages apparaîtront dans la description qui va suivre d'une pièce monobloc et ferromagnétique d'une machine électrique tournante selon l'invention, donnés à titre d'exemples non limitatifs, en référence aux dessins annexés dans lesquels :
La figure 1 est une représentation schématique en perspective et en coupe d'un rotor selon la présente invention ;
La figure 2 est une représentation schématique en vue de dessus du rotor de la figure 1 ;
La figure 3 est une représentation schématique en perspective et en coupe d'un stator selon la présente invention ;
Les figures 4, 5 et 6 sont des représentations schématiques de différentes étapes du procédé de formation par fabrication additive d'une pièce selon la présente invention.

### EXPOSÉ DÉTAILLÉ DE MODES DE RÉALISATION PARTICULIERS

La présente invention concerne une pièce monobloc et ferromagnétique d'une machine électrique tournante et son procédé de fabrication. La machine électrique tournante peut, à cet égard, comprendre un générateur ou un moteur.

Par « monobloc », on entend une pièce faite d'un seul tenant. En d'autres termes, la pièce n'est pas obtenue par un assemblage.

Le matériau ferromagnétique formant la pièce peut comprendre au moins un alliage choisi parmi : FeSi, FeCo, FeNi.

Un alliage de FeSi peut notamment comprendre 3 % ou 6 % en masse de silicium.

Dans la suite de la description, la pièce 100 est un rotor d'une machine électrique tournante. Toutefois, la présente invention ne doit pas être limitée à cette seule pièce, et l'homme du métier à la lecture de la description pourra adapter les concepts présentés à d'autres types de pièces, et notamment à un stator.

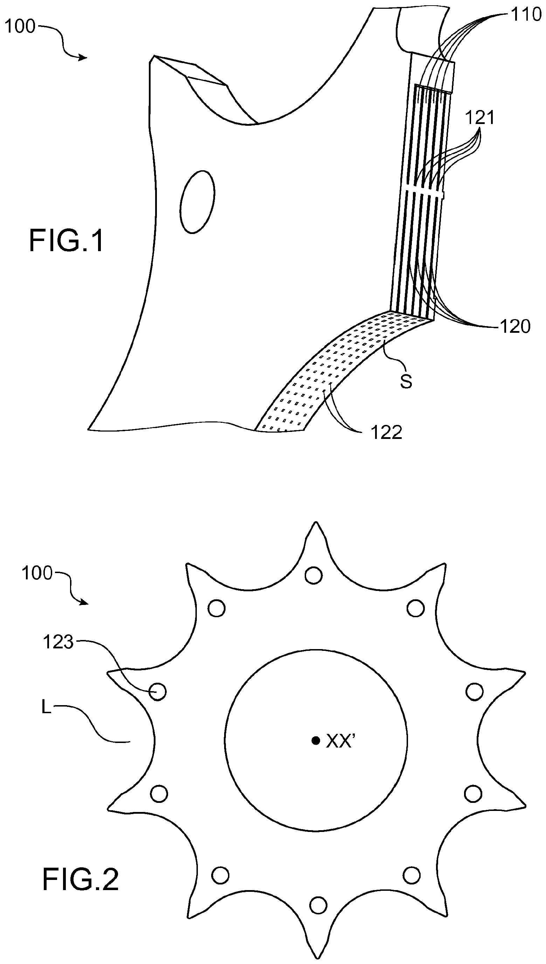

Aux figures 1 et 2, on peut voir un exemple de rotor 100.

Le rotor 100 s'étend selon un axe d'élongation XX' et comprend en particulier une alternance de premières sections 110 d'une première épaisseur E1 et de deuxièmes sections 120 d'une deuxième épaisseur E2.

Il est entendu que l'épaisseur E1 et/ou l'épaisseur E2 ne sont pas nécessairement constantes. Par exemple, les premières sections peuvent présenter un profil d'épaisseur croissant selon une direction radiale au rotor.

Le rotor 100 présente également une symétrie de révolution autour de l'axe d'élongation XX'.

Il est par ailleurs entendu sans qu'il soit nécessaire de le préciser qu'une pièce qui s'étend selon un axe présente deux extrémités.

Le rotor 100 comprend également un alésage délimité par une surface S, et qui débouche au niveau de chacune des extrémités dudit rotor.

À titre d'exemple, l'épaisseur E1 peut être comprise entre 150 µm et 1000µm, avantageusement entre 150 µm et 800 µm, encore plus avantageusement entre 300 µm et 500 µm.

De manière équivalente, la deuxième épaisseur E2 qui est inférieure à la première épaisseur E1 peut être comprise entre 30 µm et 200 µm.

Selon la présente invention, les premières sections 110 sont pleines tandis que chaque deuxième section 120 est intercalée entre deux premières sections 110 et est partiellement évidée. En particulier, les évidements des deuxièmes sections 120 correspondent à au moins 30%, avantageusement 40 %, encore plus avantageusement 50%, du volume desdites sections.

Les évidements peuvent être comblés par un matériau isolant organique.

Cet agencement des deuxièmes sections 120, et notamment la présence d'évidements en leur sein, permet de limiter l'apparition de courants de Foucault lorsque le rotor est intégré dans une machine tournante. En d'autres termes, les courants de Foucault induits par le flux magnétique variable circulant dans les premières sections 110 ne peuvent se développer que dans la section d'épaisseur limitée 110, les évidements des deuxièmes sections 120 étant isolants. Les courants de Foucault et les pertes associées sont ainsi limités. Il en résulte une amélioration du rendement de la machine électrique et une limitation de son échauffement.

Les deuxièmes sections 120 peuvent par ailleurs comprendre des poutres 121 configurées pour assurer la cohésion entre les premières sections 110 successives.

Une poutre 121 peut notamment prendre la forme d'un anneau et d'une épaisseur correspondant à la deuxième épaisseur E2.

Chaque section 120 peut comprendre une pluralité de poutres 121 agencées de manière concentrique autour de l'axe XX'.

De manière complémentaire ou alternative, chaque section 121 peut comprendre des premiers canaux 122.

Les premiers canaux 122 peuvent en particulier s'étendre de manière radiale dans les deuxièmes sections 120.

Les premiers canaux 122 peuvent déboucher au niveau d'une surface S délimitant l'alésage.

Le rotor 100 peut également comprendre des deuxièmes canaux de circulation fluidique 123 qui s'étendent entre les deux extrémités dudit rotor. Ces deuxièmes canaux de circulation fluidique sont notamment destinés à assurer la circulation d'un fluide de refroidissement dans le volume du rotor.

Enfin, des congés destinés à loger des aimants permanents peuvent être ménagés au niveau de la surface extérieure du rotor.

L'invention n'est toutefois pas limitée à cet agencement des aimants, et il peut être envisagé de loger ces derniers dans le rotor.

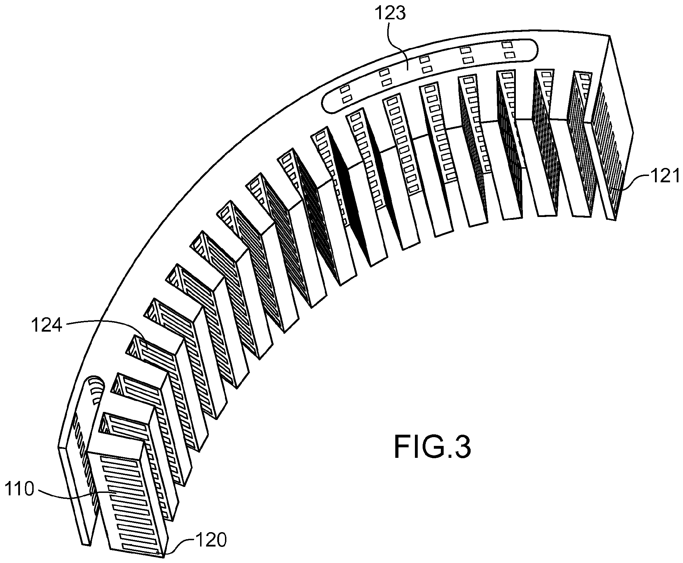

Tel qu'évoqué précédemment, la pièce 100 peut comprendre un stator 100 (figure 3).

Toutefois, en plus des éléments déjà décrits en relation avec le rotor, le stator 100 peut comprendre des passages 124 pour un bobinage de fil conducteur, par exemple du cuivre, et notamment un fil de cuivre enrobé d'un isolant électrique.

Le procédé de formation d'un tel rotor 100 implique la mise en oeuvre d'un procédé de fabrication additive.

Le procédé comprend notamment l'exécution en alternance d'une première pluralité de premiers cycles et d'une deuxième pluralité de deuxièmes cycles, chaque première pluralité et chaque deuxième pluralité étant destinée à former, respectivement, une première section et une deuxième section.

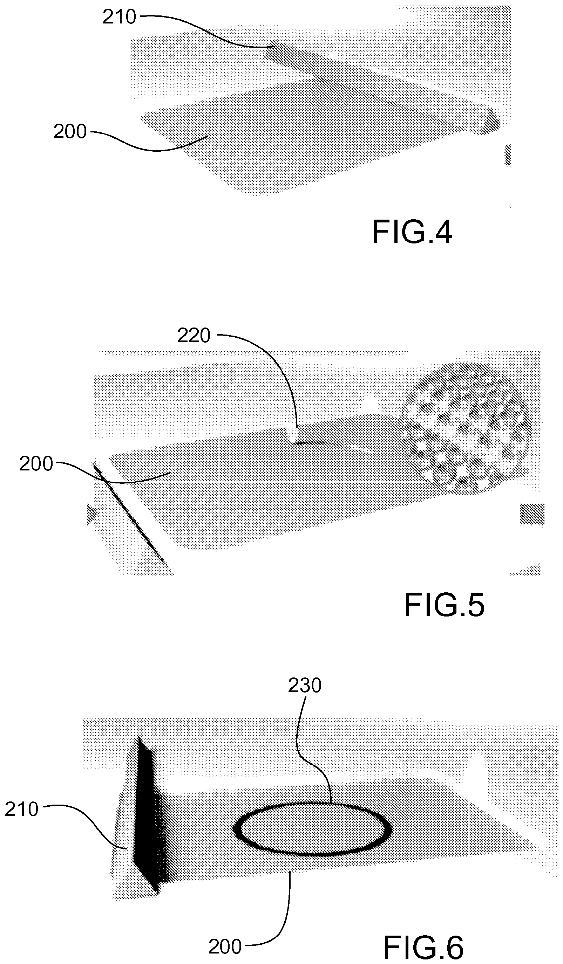

En particulier, chacun des premiers et seconds cycles comprend les étapes suivantes :
a) la formation d'une couche de poudre 300 du matériau ferromagnétique sur la face avant d'un support 200 (figures 4 et 6) ;
b) une consolidation sélective, avantageusement une fusion sélective d'une région de la couche de poudre de manière à former un motif relatif à l'une ou l'autre de la première ou de la deuxième section considérée (figure 5).

L'étape a) peut être exécutée au moyen d'une racle 210 ou d'un rouleau.

L'étape b) peut être exécutée au moyen d'une source de rayonnement lumineux et notamment un laser 220.

De manière alternative, l'étape b) peut être réalisée au moyen d'une colle.

À l'issue de l'étape b), une strate 230 de l'une ou l'autre d'une première section ou d'une deuxième section est formée.

Les étapes a) et b) sont répétées autant de fois que nécessaire pour former la pièce 100.

Le procédé de fabrication additive ainsi présenté, permet de former une pièce, et notamment le rotor 100, sous forme monobloc. En d'autres termes, la formation du rotor 100 ne nécessite pas la mise en oeuvre d'étapes d'assemblage.

La considération des deuxièmes sections, et plus particulièrement des évidements, permet de diminuer la survenance de courants de Foucault.

Par ailleurs, les premiers canaux 122, dès lors qu'ils sont débouchants, permettent d'évacuer la majeure partie de la poudre non exposée au rayonnement lors de l'exécution de l'étape b).

Enfin, les deuxièmes canaux de circulation fluidique selon ce procédé préviennent tout risque de fuites.

Le procédé ainsi décrit peut ainsi être mis en oeuvre pour toute autre pièce d'une machine électrique tournante.

## Revendications

1. Procédé de formation, par fabrication additive, d'une pièce (100), monobloc et ferromagnétique, d'une machine électrique tournante, la pièce (100) comprenant, selon un axe d'élongation XX', une alternance de premières sections (110) d'une première épaisseur E1 et de deuxièmes sections (120) d'une deuxième épaisseur E2, les premières sections (110) sont pleines tandis que chaque deuxième section, est intercalée entre deux premières sections (110) successives, et est partiellement évidées de manière à limiter l'établissement des pertes par courants de Foucault susceptibles de survenir lors du fonctionnement de la machine électrique tournante,
le procédé comprenant l'exécution en alternance d'une première pluralité de premiers cycles et d'une deuxième pluralité de deuxièmes cycles, chaque première pluralité et chaque deuxième pluralité étant destinée à former, respectivement, une première section et une deuxième section,
le premier et le deuxième cycle comprenant chacun les étapes suivantes :
a) la formation d'une couche de poudre d'un matériau ferromagnétique sur la face avant d'un support (200) ;
b) une fusion sélective d'une région de la couche de poudre de manière à former un motif relatif à l'une ou l'autre de la première ou de la deuxième section considérée.

2. Procédé selon la revendication 1, dans lequel :
- l'évidement des deuxièmes sections (120) correspond à au moins 30%, avantageusement 40 %, encore plus avantageusement 50 % de leur volume ;
- et/ou les deuxièmes sections (120) comprennent des poutres (121) assurant la cohésion entre les premières sections (110) successives ;
- et/ou la pièce (100) présente une symétrie de révolution autour de l'axe de d'élongation XX'.

3. Procédé selon l'une des revendications 1 ou 2, dans lequel la pièce (100) comprend un alésage débouchant selon l'une et l'autre des extrémités de la pièce (100), les évidements au niveau des deuxièmes sections (120) pouvant comprendre des premiers canaux (122), qui peuvent être débouchants, par exemple au niveau de l'alésage.

4. Procédé selon l'une des revendications 1 ou 2 dans lequel les évidements au niveau des deuxièmes sections (120) comprennent des premiers canaux (122), qui peuvent être débouchants.

5. Procédé selon l'une des revendications 1 à 4, dans lequel lors de l'exécution du procédé, des deuxièmes canaux de circulation fluidique (123), qui s'étendent selon une direction définie par l'axe d'élongation XX', sont formés.

6. Procédé selon l'une des revendications 1 à 5, dans lequel :
- la pièce (100) est un rotor, le procédé pouvant également comprendre la formation d'un arbre formé d'un seul tenant avec le rotor ;
- ou la pièce (100) est un stator.

7. Procédé selon l'une des revendications 1 à 6, dans lequel :
- la poudre de matériau magnétique comprend au moins un des alliages choisi parmi : FeSi, FeCo, FeNi.

8. Procédé selon l'une des revendications 1 à 7, dans lequel l'étape b) est exécutée au moyen d'un laser.

9. Pièce (100) d'une machine électrique tournante, monobloc et ferromagnétique, la pièce (100) comprenant, selon un axe d'élongation XX', une alternance de premières sections (110) d'une première épaisseur E1 et de deuxièmes sections (120) d'une deuxième épaisseur E2, les premières sections (110) sont pleines tandis que chaque deuxième section, est intercalée entre deux premières sections (110) successives, et est partiellement évidées de manière à limiter l'établissement des pertes par courants de Foucault susceptibles de survenir lors du fonctionnement de la machine électrique tournante.

10. Pièce (100) selon la revendication 9, dans lequel :
- l'évidement des deuxièmes sections (120) correspond à au moins 30%, avantageusement 40 %, encore plus avantageusement 50 %, de leur volume ;
- et/ou les deuxièmes sections (120) comprennent des poutres (121) assurant la cohésion entre les premières sections (110) successives ;
- et/ou la pièce (100) présente une symétrie de révolution autour de l'axe de d'élongation XX'.

11. Pièce (100) selon l'une des revendications 9 ou 10, dans lequel la pièce (100) comprend un alésage débouchant selon l'une et l'autre des extrémités de la pièce (100), les évidements au niveau des deuxièmes sections (120) pouvant comprendre des premiers canaux (122), qui peuvent être débouchants, par exemple au niveau de l'alésage.

12. Pièce (100) selon l'une des revendications 9 à 11 dans lequel les évidements au niveau des deuxièmes sections (120) comprennent des premiers canaux (122), les premiers canaux (122) pouvant être débouchants.

13. Pièce (100) selon l'une des revendications 9 à 12, dans lequel des deuxièmes canaux de circulation fluidique (123) s'étendent selon une direction définie par l'axe d'élongation XX'.

14. Pièce (100) selon l'une des revendications 9 à 13, dans lequel la pièce (100) est un rotor ou un stator.

15. Pièce (100) selon l'une des revendications 9 à 14, dans lequel le matériau magnétique comprend au moins un des alliages choisi parmi : FeSi, FeCo, FeNi.

## Patentansprüche

1. Verfahren zur Bildung durch additive Herstellung eines einstückigen und ferromagnetischen Teils (100) einer drehenden elektrischen Maschine, wobei das Teil (100) entlang einer Längenausdehnungsachse XX' ein Wechselspiel an ersten Abschnitten (110) mit einer ersten Dicke E1 und an zweiten Abschnitten (120) mit einer zweiten Dicke E2 umfasst, wobei die ersten Abschnitte (110) voll sind, während jeder zweite Abschnitt zwischen zwei aufeinanderfolgenden ersten Abschnitten (110) eingeschoben ist, und teilweise ausgehöhlt ist, um das Auftreten von Verlusten durch Wirbelströme zu begrenzen, die beim Betreiben der drehenden elektrischen Maschine entstehen können,
wobei das Verfahren das Ausführen im Wechselspiel einer ersten Vielzahl von ersten Zyklen und einer zweiten Vielzahl von zweiten Zyklen umfasst, wobei jede erste Vielzahl und jede zweite Vielzahl dazu bestimmt ist, jeweils einen ersten Abschnitt und einen zweiten Abschnitt zu bilden,
wobei der erste und zweite Zyklus jeweils die folgenden Schritte umfassen:
a) die Bildung einer Pulverschicht aus einem ferromagnetischen Material auf der Vorderseite eines Trägers (200);
b) ein selektives Schmelzen einer Region der Pulverschicht, um ein Motiv in Bezug auf den einen oder den anderen des betrachteten ersten oder des zweiten Abschnitts zu bilden.

2. Verfahren nach Anspruch 1, wobei:
- die Aushöhlung der zweiten Abschnitte (120) mindestens 30%, vorteilhaft 40%, noch vorteilhafter 50% ihres Volumens entspricht;
- und/oder die zweiten Abschnitte (120) Träger (121) umfassen, die für den Zusammenhalt zwischen den aufeinanderfolgenden ersten Abschnitten (110) sorgen;
- und/oder das Teil (100) eine Rotationssymmetrie um die Längenausdehnungsachse XX' herum aufweist.

3. Verfahren nach einem der Ansprüche 1 oder 2, wobei das Teil (100) eine Bohrung umfasst, die an dem einen und dem anderen der Enden des Teiles (100) einmündet, wobei die Aushöhlungen im Bereich der zweiten Abschnitte (120) erste Kanäle (122) umfassen können, die beispielsweise im Bereich der Bohrung einmündend sein können.

4. Verfahren nach einem der Ansprüche 1 oder 2, wobei die Aushöhlungen im Bereich der zweiten Abschnitte (120) erste Kanäle (122) umfassen, die einmündend sein können.

5. Verfahren nach einem der Ansprüche 1 bis 4, wobei bei der Ausführung des Verfahrens zweite Flüssigkeitszirkulationskanäle (123), die sich in einer Richtung erstrecken, die von der Längenausdehnungsachse XX' definiert ist, gebildet werden.

6. Verfahren nach einem der Ansprüche 1 bis 5, wobei:
- das Teil (100) ein Rotor ist, wobei das Verfahren auch die Bildung einer Welle umfassen kann, die in einem Stück mit dem Rotor gebildet wird;
- oder das Teil (100) ein Stator ist.

7. Verfahren nach einem der Ansprüche 1 bis 6, wobei:
- das Pulver aus magnetischem Material mindestens eine der Legierungen umfasst, ausgewählt aus: FeSi, FeCo, FeNi.

8. Verfahren nach einem der Ansprüche 1 bis 7, wobei der Schritt b) anhand eines Lasers ausgeführt wird.

9. Einstückiges und ferromagnetisches Teil (100) einer drehenden elektrischen Maschine, wobei das Teil (100) entlang einer Längenausdehnungsachse XX' ein Wechselspiel an ersten Abschnitten (110) mit einer ersten Dicke E1 und an zweiten Abschnitten (120) mit einer zweiten Dicke E2 umfasst, wobei die ersten Abschnitte (110) voll sind, während jeder zweite Abschnitt zwischen zwei aufeinanderfolgenden ersten Abschnitten (110) eingeschoben ist, und teilweise ausgehöhlt ist, um das Auftreten von Verlusten durch Wirbelströme zu begrenzen, die beim Betreiben der drehenden elektrischen Maschine entstehen können.

10. Teil (100) nach Anspruch 9, wobei:
- die Aushöhlung der zweiten Abschnitte (120) mindestens 30%, vorteilhaft 40%, noch vorteilhafter 50% ihres Volumens entspricht;
- und/oder die zweiten Abschnitte (120) Träger (121) umfassen, die für den Zusammenhalt zwischen den aufeinanderfolgenden ersten Abschnitten (110) sorgen;
- und/oder das Teil (100) eine Rotationssymmetrie um die Längenausdehnungsachse XX' herum aufweist.

11. Teil (100) nach einem der Ansprüche 9 oder 10, wobei das Teil (100) eine Bohrung umfasst, die an dem einen und dem anderen der Enden des Teiles (100) einmündet, wobei die Aushöhlungen im Bereich der zweiten Abschnitte (120) erste Kanäle (122) umfassen können, die beispielsweise im Bereich der Bohrung einmündend sein können.

12. Teil (100) nach einem der Ansprüche 9 bis 11, wobei die Aushöhlungen im Bereich der zweiten Abschnitte (120) erste Kanäle (122) umfassen, wobei die ersten Kanäle (122) einmündend sein können.

13. Teil (100) nach einem der Ansprüche 9 bis 12, wobei sich zweite Flüssigkeitszirkulationskanäle (123) in einer Richtung erstrecken, die von der Längenausdehnungsachse XX' definiert ist.

14. Teil (100) nach einem der Ansprüche 9 bis 13, wobei das Teil (100) ein Rotor oder ein Stator ist.

15. Teil (100) nach einem der Ansprüche 9 bis 14, wobei das magnetische Material mindestens eine der Legierungen umfasst, ausgewählt aus: FeSi, FeCo, FeNi.

## Claims

1. A method of forming, by additive manufacturing, a one-piece ferromagnetic part (100) of a rotating electric machine, the part (100) comprising, according to an axis of elongation XX', an alternation of first sections (110) with a first thickness E1 and second sections (120) with a second thickness E2, the first sections (110) are solid whereas each second section is interposed between two successive first sections (110), and is partially recessed so as to limit the build-up of eddy current losses likely to occur during the operation of the rotating electric machine,
the method comprising the alternate execution of a first plurality of first cycles and of a second plurality of second cycles, each first plurality and each second plurality being intended to form, respectively, a first section and a second section,
each of the first and second cycles comprising the following steps:
a) the formation of a layer of powder of a ferromagnetic material over the front face of a support (200);
b) a selective melting of a region of the layer of powder so as to form a pattern relating to either one of the considered first or second section.

2. The method according to claim 1, wherein:
- the recess of the second sections (120) corresponds to at least 30%, preferably 40%, even more preferably 50% of their volume;
- and/or the second sections (120) comprise beams (121) ensuring cohesion between the successive first sections (110);
- and/or the part (100) features an axisymmetry around the axis of elongation XX'.

3. The method according to one of claims 1 or 2, wherein the part (100) comprises a bore opening out at either one of the ends of the part (100), the recesses at the second sections (120) possibly comprising first channels (122), which may open out, for example at the bore.

4. The method according to one of claims 1 or 2, wherein the recesses at the second sections (120) comprise first channels (122), which may be open-through.

5. The method according to one of claims 1 to 4, wherein during the execution of the method, second fluid circulation channels (123), which extend according to a direction defined by the axis of elongation XX', are formed.

6. The method according to one of claims 1 to 5, wherein:
- the part (100) is a rotor, the method possibly also comprising the formation of a shaft made in one-piece with the rotor;
- or the part (100) is a stator.

7. The method according to one of claims 1 to 6, wherein:
- the magnetic material powder comprises at least one of the alloys selected from among: FeSi, FeCo, FeNi.

8. The method according to one of claims 1 to 7, wherein step b) is carried out by means of a laser.

9. A one-piece and ferromagnetic part (100) of a rotating electric machine, the part (100) comprising, according to an axis of elongation XX', an alternation of first sections (110) with a first thickness E1 and second sections (120) with a second thickness E2, the first sections (110) are solid whereas each second section is interposed between two successive first sections (110), and is partially recessed so as to limit the build-up of eddy current losses likely to occur during the operation of the rotating electric machine.

10. The part (100) according to claim 9, wherein:
- the recess of the second sections (120) corresponds to at least 30%, advantageously 40%, even more advantageously 50%, of their volume;
- and/or the second sections (120) comprise beams (121) ensuring cohesion between the successive first sections (110);
- and/or the part (100) features an axisymmetry around the axis of elongation XX'.

11. The part (100) according to one of claims 9 or 10, wherein the part (100) comprises a bore opening out at either one of the ends of the part (100), the recesses at the second sections (120) possibly comprising first channels (122), which may open out, for example at the bore.

12. The part (100) according to one of claims 9 to 11, wherein the recesses at the second sections (120) comprise first channels (122), the first channels (122) possibly being open-through.

13. The part (100) according to one of claims 9 to 12, wherein second fluid circulation channels (123) extend according to a direction defined by the axis of elongation XX'.

14. The part (100) according to one of claims 9 to 13, wherein the part (100) is a rotor or a stator.

15. The part (100) according to one of claims 9 to 14, wherein the magnetic material comprises at least one of the alloys selected from among: FeSi, FeCo, FeNi.
